Europäisches Patentamt

European Patent Office

Office européen des brevets

(11) Veröffentlichungsnummer: **0 245 731**

**A1**

(12) **EUROPÄISCHE PATENTANMELDUNG**

(21) Anmeldenummer: **87106391.3**

(22) Anmeldetag: **02.05.87**

(51) Int. Cl.⁴: **A01C 1/08**

(30) Priorität: **13.05.86 DE 3616010**

(43) Veröffentlichungstag der Anmeldung:
**19.11.87 Patentblatt 87/47**

(84) Benannte Vertragsstaaten:
**AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Nemecek, Franz, Dipl.-Ing.**
**Ernst-Lemmer-Strasse 26**
**D-4000 Düsseldorf 13(DE)**
Erfinder: **Eiteneuer, Karl-Heinz**
**Im Sonnenwinkel 10**
**D-5276 Wiehl(DE)**
Erfinder: **Heinrich, Gunter, Dr.**
**Am Mittelberg 21**
**D-5090 Leverkusen 1(DE)**

(54) **Verfahren zum Beizen und/oder Inkrustieren von Saatgutkörnern.**

(57) Es wird ein neues Verfahren zum Beizen und/oder Inkrustieren von Saatgutkörnern mit flüssigen Beiz-und/oder Inkrustiermitteln auf wäßriger Basis bereitgestellt.

Das Verfahren ist dadurch gekennzeichnet, daß man die Saatgutkörner mit eine wäßrigen Beiz- und/oder Inkrustierflüssigkeit (19) kurze Zeit behandelt und die so behandelten Saatgutkörner in einer pneumatischen Förderleitung (4) sehr schnell trocknet.

Hierbei ist die pneumatische Förderleitung (4) vorzugsweise vertikal angeordnet und es wird ein gegen die Schwerkraft fließender Luftstrom eingeblasen.

EP 0 245 731 A1

## Verfahren zum Beizen und/oder Inkrustieren von Saatgutkörnern

Die vorliegende Erfindung betrifft ein Verfahren zum Beizen und/oder Inkrustieren von Saatgutkörnern mit flüssigen Beiz-und/oder Inkrustiermitteln auf wäßriger Basis.

Das in der Landwirtschaft verwendete Saatgut wird vor der Aussaat mit verschiedenen Wirkstoffen beschichtet, um seinem Befall mit Pilzen oder Krankheiten vorzubeugen. In neuerer Zeit werden solche Substanzen in wäßriger Form als Lösung oder Suspension verwendet. Man setzt dazu beispielsweise Wirkstoffe wie Triadimenol, Mercaptodimethur u.a. ein.

Es sind mehrere Verfahren bekannt, nach denen das Saatgut in diversen Beizmaschinen mit einem Sprühorgan wie einer Sprühscheibe oder Düse besprüht wird, um dieses in einem anschließenden Mischvorgang in einer Trommel-Schnecke oder ähnlichen Apparaten nachzuverteilen. Ziel dieser Verfahren ist es, eine gleichmäßige Beschichtung der Körner zu erreichen, so daß - schließlich alle Körner eine gleichmäßige Schicht über ihre ganze Oberfläche erhalten und außerdem jedes Saatgutkorn die genau gleiche Menge Wirkstoff(e) aufweist.

Ein Nachteil der bisher bekannten Verfahren ist es, daß die zur Ausbringung der Wirkstoffe verwendete Wassermenge sehr klein sein muß, weil sonst das Saatgut bei der anschließenden Lagerung in den Säcken verkleben oder gar vorzeitig keimen würde. Für Behandlung von 100 kg Saatgut verwendet man nach bisherigen Verfahren meistens 400 bis 600 ml Lösung, welche rund 150 Gramm verschiedener Wirkstoffe enthalten. Diese kleine Flüssigkeitsmenge läßt sich in der Praxis nicht völlig gleichmäßig auf alle Körner verteilen und die unterbeizten Körner sind dann Ursache für - schlechte Erträge aus dem Saatgut.

Es wurde gefunden, daß man Saatgutkörner wesentlich besser, einfacher und schonender beizen und/oder inkrustieren kann, wenn man sie mit einer wäßrigen Beiz-und/oder Inkrustierflüssigkeit kurze Zeit behandelt und die so behandelten Saatgutkörner in einer pneumatischen Förderleitung sehr schnell trocknet.

Beim erfindungsgemäßen Verfahren werden vorzugsweise größere Wassermengen angewendet, insbesondere setzt man 1 bis 2,5 l Wasser pro 100 kg Saatgut in der wäßrigen Beiz-und/oder Inkrustierflüssigkeit ein.

Im einzelnen kann das Verfahren wie folgt beschrieben werden:

Zunächst wird das Saatgut mit der Wirkstoff-Lösung oder -Suspension unter Verwendung einer großen Wassermenge von 1 bis 2,5 Liter Wasser je 100 kg Saatgut benetzt. Dazu eignen sich die marktüblichen Beizgeräte, die mit Sprühscheiben oder Düsen bestückt sind. Es wurde jedoch überraschenderweise gefunden, daß man - im Gegensatz zur allgemeinen Meinung - auf Sprühgeräte verzichten kann, wenn man die Flüssigkeit direkt in eine einfache Bürsten-Förderschnecke eindosiert, wobei das Saatgut die Bürsten-Schnecke vorzugsweise bis maximal 10 Sekunden und insbesondere 1 bis 3 Sekunden durchläuft und wobei das Saatgut bei Drehzahlen von ca. 800 bis ca. 1400 Umdrehungen pro Minute in die pneumatische Förderstrecke zum Trocknen eingeschleust wird. Beispielsweise geeignete Bürstenförderschnecken haben einen Durchmesser von ca. 0,1 m und ca. 2 m Länge.

Bei der Suche nach geeigneten Trocknungsverfahren wurde mit Überraschung festgestellt, daß wenn man die nassen Saatgutkörpner wie z.B. Raps, Getreide oder Mais durch eine vertikal angebrachte pneumatische Förderstrecke bläst, die Oberfläche der Körner besonders schnell getrocknet wird. Vorteile dieses Verfahrens sind die gleichmäßige Umströmung der Einzelkörner mit der Förderluft und ihre große Relativgeschwindigkeit bei der Förderung gegen die Schwerkraft. Von großem Nutzen für die gute Behandlung ist dabei die Tatsache, daß sich die Einzelkörner bei dem pneumatischen Fördervorgang in einem großen Abstand voneinander befinden (rund 5 bis 10 Korndurchmesser) und stets in Bewegung sind, sodaß eine Verklebung der Körner während der Trocknung nicht vorkommen kann. Da sich dabei das Gut in der Schwebe befindet, erfolgt das Trocknen außerdem sehr schonend, ohne daß ein starker mechanischer Abrieb stattfindet. Die Verweilzeit in der Anlage beträgt vorzugsweise maximal 10 Sekunden und insbesondere etwa 3 bis 6 sec., wobei das Saatgut nur geringe Wassermengen durch Absorption aufnehmen kann.

Mit Hilfe des erfindungsgemäßen Verfahrens können Saatgutkörner wie z.B. Raps-, Getreideoder Maissaatgutkörner mit den üblichen Wirkstoffen gebeizt und/oder inkrustiert werden. Als einsetzbare Wirkstoffe seien beispielhaft genannt: Triadimenol, Mercaptodimethur, Bitertanol, Fuberidazol, Imazalil, Thiram und/oder andere Wirkstoffe und ihre Kombinationen.

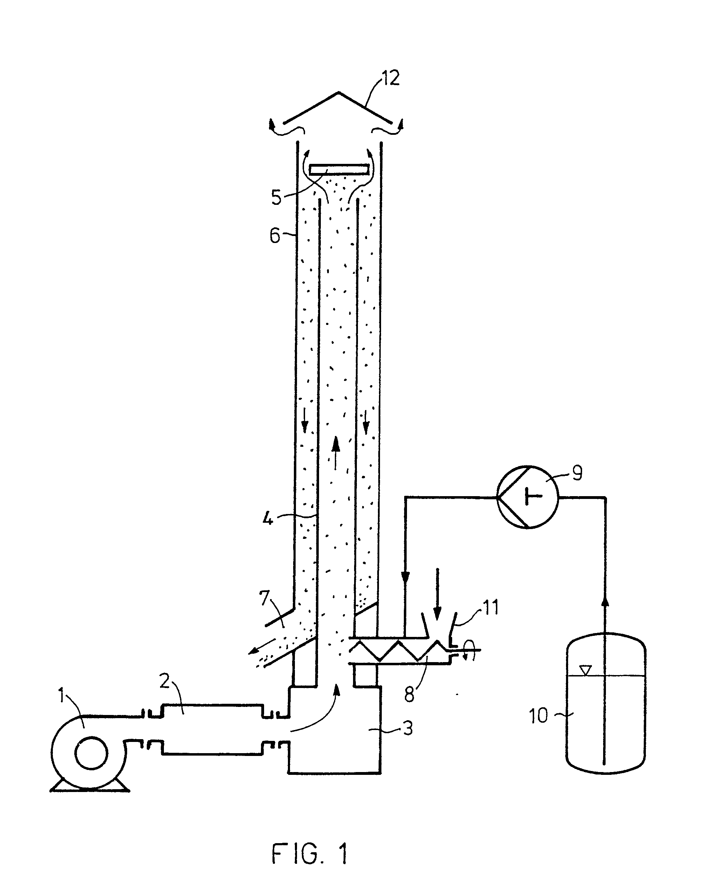

Im allgemeinen setzt man 200 g bis 600 g Wirkstoff pro Liter Beiz-und/oder Inkrustierflüssigkeit ein. Figur 1 zeigt eine beispielhafte Ausgestaltung des erfindungsgemäßen Verfahrens. Es handelt sich hier um eine Anlage mit einer Beizkapazität für 6000 kg/Saatgut pro Stunde.

Die Anlage besteht nach Fig. 1 aus einem Ventilator (1) mit rund 4000 m³/h Luft und 400 mm WS Förderdruck, mit einem 80 KW Luftvorwärmer (2), dem Luftverteiler (3) von 600 x 600 x 600 mm, dem Steigrohr (4) von 360 mm Durchmesser und 10 m Länge, dem Abscheider (5), dem Fallrohr (6) mit Kappe (12), einer Rutsche (7), sowie der Bürstenschnecke (8) mit Trichter (11), wobei das Bürstenschneckenrohr 120 mm Durchmesser besitzt, und 2 m Länge und der Dosierpumpe (9). Die Beizflüssigkeit befindet sich im Behälter (10).

Das Saatgut wird in die Schnecke (8) geführt, dazu mit der Pumpe (9) die Beizflüssigkeit eindosiert und die Beize mit der Schnecke auf die Körner aufgerollt. Nach dem Eintragen in die Förderleitung (4) werden die Körner von dem Luftstrom bei Temperaturen von 80°C erfaßt und vertikal nach oben beschleunigt. Die Luftgeschwindigkeit soll dabei vorzugsweise um 30 bis 50 % größer sein als die Sinkgeschwindigkeit der Körner. Diese Relation kann durch Einstellung des Luftstroms leicht erfüllt werden. In dem Abscheider und Sichter (5) wird die Luft mit Staub und Abrieb von dem Korn getrennt. Die getrockneten und gereinigten Körner gelangen dann in freiem Fall durch das Fallrohr (6) auf die Rutsche (7), wo sie abgesackt werden.

Wie bereits oben erwähnt, können 6000 kg/Stunde Saatgut eingegeben werden (Pos. 11). Das Bürstenschneckenrohr (8) hat eine Länge von 2 m und einem Durchmesser von 120 mm. Die Bürstenschnecke macht 1200 Umdrehungen pro Minute. Der Durchsatz der auf das Saatgut aufzubringenden Beiz-und/oder Inkrustierflüssigkeit wird vorzugsweise mit der Drehzahl der Bürstenschnecke geregelt. Die Höhe der pneumatischen Förderstrecke (vertikaler Turm 12) beträgt ca. 10 Meter. Der Durchmesser des Fallrohrs (6) beträgt 700 mm, der Durchmesser des dazu koaxialen Steigrohrs (4) beträgt 360 mm. Die in der Anlage eingesetzten Rohrstrecken bestehen vorzugsweise aus Kunststoff mit guten wärmeisolierenden Eigenschaften, beispielsweise aus Polypropylen. Neben dieser beispielhaften Ausführungsform können selbstverständlich auch andere Varianten des erfindungsgemäßen Verfahrens realisiert werden. So kann man beispielsweise in der eben beschriebenen Apparatur anstelle des als Prallplatte konzipierten Abscheiders (5) einen Zyklon-oder Umlenkscheider verwenden.

Weiterhin kann man die Trocknung durch zusätzliches Aufwärtsströmen von warmer Luft (vorzugsweise 80 bis 100°C) durch das Fallrohr (6) intensivieren.

Eine andere Variante besteht darin, daß man statt der koaxialen Leitungen ein parallel geführtes und über einen Krümmer angeschlossenes Fallrohr oder andere Leitungsanordnungen verwendet.

Weiterhin kann man die Abscheidung und Trennung von Luft und Saatgut erst am Ende der Strecke bei (7) vornehmen.

Eine weitere Möglichkeit der Anwendung des erfindungsgemäßen Verfahrens besteht darin, daß man die Trocknungsstrecke als Zusatzverfahren zu einem marktüblichen Beizgerät verwendet, in dem jedoch unter Einsatz einer großen Wassermenge gearbeitet wird.

## Ansprüche

1. Verfahren zum Beizen und/oder Inkrustieren von Saatgutkörnern, dadurch gekennzeichnet, daß man die Saatgutkörner mit einer wäßrigeren Beiz- und/oder Inkrustierflüssigkeit kurze Zeit behandelt und die so behandelten Saatgutkörner anschließend in einer pneumatischen Förderleitung sehr schnell trocknet.

2. Verfahren gemäß Anspruch 1, dadurch gekennzeichnet, daß man 1 bis 2,5 l Wasser in der Beizlösung pro 100 kg Saatgutkörnern verwendet.

3. Verfahren gemäß Anspruch 1, dadurch gekennzeichnet, daß die pneumatische Förderleitung vertikal angeordnet ist und ein gegen die Schwerkraft fließender Luftstrom eingeblasen wird.

4. Verfahren gemäß Anspruch 1, dadurch gekennzeichnet, daß die Behandlung der Saatgutkörner mit der wäßrigen Beiz-und/oder Inkrustierflüssigkeit mit einer schnell rotierenden Bürstenschnecke durchgeführt wird und die Behandlungszeit in der Bürstenschnecke pro Saatgutkorn maximal 10 Sekunden beträgt.

5. Verfahren gemäß Anspruch 1, dadurch gekennzeichnet, daß die Trocknungszeit eines Saatgutkorns in der pneumatischen Förderleitung maximal 10 Sekunden beträgt.

6. Verfahren gemäß Anspruch 3, dadurch gekennzeichnet, daß der Luftstrom so reguliert wird, daß die Luftgeschwindigkeit 30 bis 50 Prozent größer ist als die Sinkgeschwindigkeit der Saatgutkörner.

7. Verfahren gemäß Anspruch 1, dadurch gekennzeichnet, daß das Auftragen der Beiz-und/oder Inkrustierflüssigkeit ohne den Einsatz eines Sprühorgans durchgeführt wird.

8. Verfahren gemäß Anspruch 1 bis 4, dadurch gekennzeichnet, daß der Durchsatz der auf das Saatgut aufzubringenden Beiz-und/oder Inkrustierflüssigkeit durch die Drehzahl der rotierenden Bürstenschnecke geregelt wird.

FIG. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 954 643  (PORTER)<br>* Spalte 6, Zeilen 26-75;  Spalte 7, Zeilen 1-33; Figuren 1,2 * | 1,2,3 | A 01 C    1/08 |
| | --- | | |
| X | FR-A-2 354 147  (KODAK)<br>* Seite  5, Zeilen 28-40; Seiten 6,7,8,9; Abbildungen 1-6 * | 1,2,3 | |
| | --- | | |
| A | GB-A-2 164 587  (GERMAIN'S)<br>* Seite  1,  Zeilen  61-97; Abbildungen 1,2 * | 1 | |
| | --- | | |
| A | DE-C- 554 734  (RAFETZEDER) | | |
| | ----- | | |

RECHERCHIERTE
SACHGEBIETE (Int. Cl.4)

A 01 C

Der vorliegende Recherchenbericht wurde für alle Patentansprüche erstellt.

| Recherchenort<br>DEN HAAG | Abschlußdatum der Recherche<br>26-08-1987 | Prüfer<br>VERMANDER R.H. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82